# NEUE EUROPÄISCHE PATENTSCHRIFT

(11) **EP 0 892 883 B2**
(45) Veröffentlichungstag und Bekanntmachung des Hinweises auf die Entscheidung über den Einspruch: **06.07.2005**
(45) Hinweis auf die Patenterteilung: 06.09.2000
(21) Anmeldenummer: 98907829.0
(22) Anmeldetag: 20.01.1998
(51) Int. Cl.: E05D 11/00

(54) **BOHRVORRICHTUNG**
DRILLING DEVICE
DISPOSITIF DE PER AGE

(30) Priorität: 12.02.1997 DE 29702379 U; 20.03.1997 DE 29705088 U
(43) Veröffentlichungstag der Anmeldung: 27.01.1999
(73) Patentinhaber: Fetzer, Gerhard, 75417 Mühlacker (DE)
(72) Erfinder: Fetzer, Gerhard, 75417 Mühlacker (DE)
(74) Vertreter: Ostertag, Reinhard
(86) Internationale Anmeldenummer: PCT/DE1998/000160
(87) Internationale Veröffentlichungsnummer: WO 1998/036144

(56) Entgegenhaltungen:
- EP-A- 0 154 790
- WO-A1-98/36144
- DE-A- 2 841 200
- DE-A- 2 970 237
- US-A- 4 686 769
- US-A- 5 059 071
- Blum-Katalog: Blum Möbelbeschläge; Ausgabe 1989

## Beschreibung

Die Erfindung bezieht sich auf ein Bohrvorrichtung für Türen, Klappen oder Deckel o. dgl. Eine derartige Bohrvorrichtung ist bekannt.

Solche Bohrvorrichtungen werden gebraucht, um handelsübliche Scharniere montieren zu können, die einen topfförmigen Zentralkörper und zwei an diesen anschließende Befestigungsarme haben, die durchbohrt sind und die zur Aufnahme von je einer, das Scharnier an der Tür o. dgl. festlegenden Befestigungsschraube dienen, siehe z.b. US 5059071 A.

Nun besteht aber bei handelsüblichen Scharnieren das Problem der unterschiedlichen Gestaltung, was bewirkt, daß ausgehend von einer Türkante die Lage der den topfförmigen Zentralkörper aufnehmenden Hauptbohrung veränderlich eingerichtet werden muß. Dies geschieht durch eine mit Stellexzentern arbeitende Anschlagverstellung, mit der bekannte Bohrvorrichtungen ausgerüstet sind.

Damit ist aber ein weiteres Problem noch nicht gelöst, das darin besteht, daß bei handelsüblichen Scharnieren auch die Befestigungsarme in Bezug auf den topfförmigen Zentralkörper unterschiedlich angeordnet sein können. Die Einschraublöcher für die Scharnier-Befestigungsschrauben müssen deshalb bei unterschiedlichen Scharnierformen extra gebohrt werden. Das ist zeitraubend, umständlich und teuer.

Der Erfindung liegt die Aufgabe zugrunde, diesen Nachteil zu vermeiden und eine Bohrvorrichtung der eingangs genannten Art zu schaffen, die neben der Verstellung der Lage der den topfförmigen Zentralkörper aufnehmenden Hauptbohrung auch eine Berücksichtigung der unterschiedlichen Scharnierformen zuläßt, so daß sowohl die Hauptbohrung als auch die Einschraublöcher für die Scharnier-Befestigungsschrauben in einem einzigen Arbeitsgang hergestellt werden könne. Dabei sollen Zertaufwand und Kosten verringert werden, und es soll der Arbeitsablauf vereinfacht sein.

Diese Aufgabe wird gemäß der Erfindung gelöst durch die Merkmale des Anspruchs 1 oder des Anspruchs 9. Vorteilhafte Weiterbildungen des Gegenstandes des Anspruches 1 ergeben sich aus den Merkmalen der Unteransprüche sowie aus der Beschreibung und der Zeichnung.

### Zeichnung

Ein Ausführungsbeispiel der Erfindung ist in der Zeichnung dargestellt und in der nachfolgenden Beschreibung näher erläutert. Es zeigen
Fig. 1 eine Vorderansicht der Bohrvorrichtung,
Fig. 2 eine Ansicht der Bohrvorrichtung von oben,
Fig. 3 eine Ansicht der Bohrvorrichtung von unten,
Fig. 4 eine Vorderansicht eines Werkzeugführung-Trägers im Schnitt,
Fig. 5 eine Ansicht des Trägers von oben,
Fig. 6 eine Anschlagstange für die Bohrvorrichtung,
Fig. 7 eine Bohrhilfe und
Fig. 8 eine Variante der Bohrhilfe nach Fig. 7 in Seiten- und Rückenansicht.

### Beschreibung des Ausführungsbeispiels

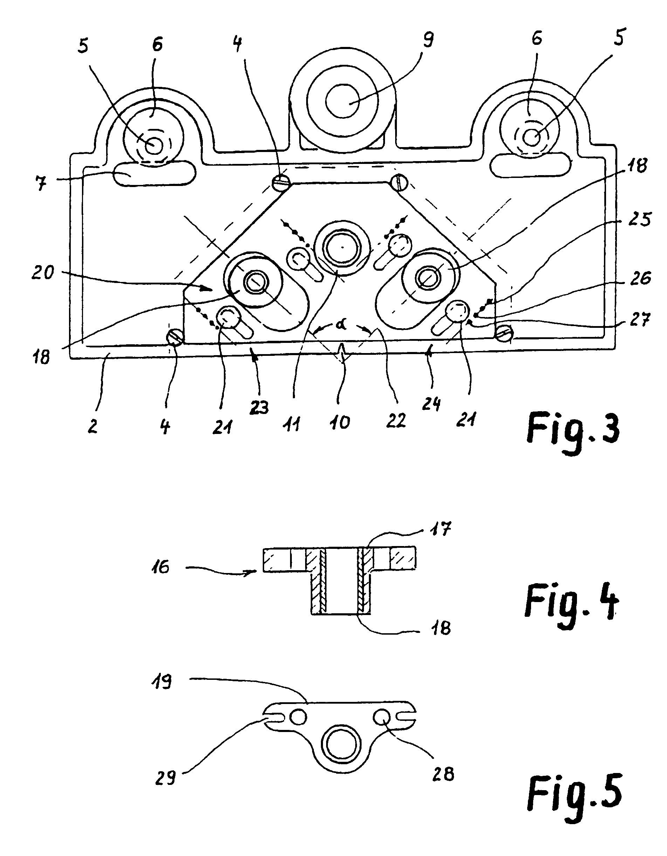

Eine Bohrvorrichtung 1 hat eine Grundplatte 2 und eine Aufsetzplatte 3, die mit der Grundplatte 2 über vier Schrauben 4 verbunden ist (vgl. Fig. 3).

Die Grundplatte 2 ist mit zwei, einen relativ gro-ßen Abstand voneinander aufweisenden Bohrungen 5 versehen, die zur Aufnahme von zwei hebelbetätigbaren Stellexzentern 6 bestimmt sind. Zur Kontrolle der jeweiligen Einstellung der Stellexzenter 6 ist jede Bohrung 5 mit einem Kontrollfenster 7 komplettiert. Zwischen den beiden Stellexzentern 6 ist an der Grundplatte 2 ein zylindrischer Aufsatz 8 mit einer Aufnahmebohrung 9 vorgesehen, die zur Aufnahme einer nicht dargestellten Aufspannvorrichtung der Bohrvorrichtung 1 bestimmt ist.

Auf ihrer der Aufnahmebohrung 9 gegenüberliegenden Längsseite ist die Grundplatte 2 mit einer Justierkerbe 10 versehen, mit der die korrekte Ausrichtung der Bohrvorrichtung 1 auf dem zu bearbeitenden Werkstück kontrolliert werden kann.

Die an der Grundplatte 2 befestigte Aufsetzplatte 3 trägt in ihrer Mitte eine zentrale Werkzeug-Führungsbuchse 11 für ein nicht näher dargestelltes, fräserartiges Bohrwerkzeug. An einem Schaft 12 des Bohrwerkzeuges ist eine Muffe 13 befestigt, die einerseits einer Rückführfeder 14 als Anlage dient, andererseits aber auch einen Arbeitshub des Bohrwerkzeuges nach unten begrenzt, indem sie bei zusammengedrückter Rückführfeder 14 an der Aufsetzplatte 3 anschlägt. Die Muffe 13 ist auf dem Schaft 12 verstellbar, um den Arbeitshub des Bohrwerkzeuges zu verändern. An ihrer Oberfläche hat die Muffe 13 eine Mehrkant-Ausnehmung 15 zum Eingriff eines entsprechenden Mehrkant-Pins, der antriebsmäßig mit einer Bohrspindel einer Bohrmaschine verbindbar ist. Mehrkant-Pin und Bohrspindel sind aber in der Zeichnung nicht dargestellt, weil sie nicht erfindungswesentlich sind.

Zu beiden Seiten der zentralen Werkzeug-Führungsbuchse 11 sind an der Aufsetzplatte 3 zwei Träger 16 vorzugsweise aus Kunststoff befestigt. Einer der beiden Träger 16 ist in den Fig. 4 und 5 dargestellt. In einem Zentralstück 17 nimmt jeder Träger 16 eine Werkzeugführung 18 für ein nicht dargestelltes Bohrwerkzeug auf. Seitlich hat jeder Träger 16 zwei Arme 19, die je eine Verstelleinrichtung 20 und je eine Feststellschraube 21 für den Träger 16 aufnehmen.

Über den Träger 16 ist die Werkzeugführung 18 auf der Aufsetzplatte 3 verstellbar und fixierbar und zwar beispielsweise entlang der beiden Schenkel 22 eines rechten Winkels a. Eine solche Verstellbarkeit ist dadurch erreicht, daß in Richtung des Schenkels 22 des Winkels a und zu beiden Seiten jedes Schenkels 22 auf der Aufsetzplatte 3 je eine Fixiereinrichtung 23 bzw. 24 vorgesehen ist. Jede Fixiereinrichtung 23 bzw. 24 hat eine Reihe 25 von Bohrungen 26, die entweder selbst Stifte 27 mit Preßsitz aufnehmen oder die zur gleitbaren und deshalb umsteckbaren Aufnahme von Stiften 27 ausgelegt sind. Als Gegenstücke dienen die Arme 19 jedes Trägers 16, die entweder die Stifte 27 in Bohrungen 28 mit Preßsitz aufnehmen oder die lediglich zur gleitbaren Aufnahme von Stiften 27 ausgelegt sind. Im letzteren Fall können statt Bohrungen 28 auch Führungsschlitze 29 an den Armen 19 Anwendung finden, so wie es in der Figur 5 dargestellt ist.

Auf diese Weise sind die beiden Träger 16 auf der Aufsetzplatte 3 in Stufen entlang der Schenkel 22 des Winkels α verstellbar. Nach dem ausgewählten Verstellen wird jeder Träger 16 mit den zwei Feststellschrauben 21 auf der Aufsetzplatte 3 fixiert. Statt eines Winkels α von 90° kann auch ein anderer Winkel z.B. von 45° vorgesehen sein. Für ganzlich unübliche Scharnierformen kann es auch nötig werden, die ganze Aufsetzplatte 3 auszutauschen. Bei Verwendung einer derartigen Austausch-Aufsetzplatte kann dann auf die Verstellbarkeit der beiden Werkzeugführungen 18 verzichtet werden. Die Werkzeugführungen 18 werden in einem solchen Fall lediglich auf der Aufsetzplatte 3 fixiert.

Nachdem dann die vom Träger 16 getragene Werkzeugführung 18 in ihre gewünschte Lage gebracht worden ist, kann je ein nicht näher dargestelltes Bohrwerkzeug in die Werkzeugführung 18 eingesetzt werden. Die beiden Bohrwerkzeuge haben Schäfte 30 u. 31, an denen je eine Muffe 32 bzw. 33 befestigt ist, die einerseits je einer Rückführfeder 34 bzw. 35 als Anlage dient, andererseits aber auch einen Arbeitshub des Bohrwerkzeuges nach unten begrenzt, indem sie bei zusammengedrückter Rückführfeder 34 bzw. 35 an der Aufsetzplatte 3 anschlägt. Die Muffen 32 u. 33 sind auf den Schäften 30 u. 31 verstellbar, um den Arbeitshub ihrer Bohrwerkzeuge zu verändern.

An ihrer Oberseite hat jede Muffe 32 bzw. 33, geradeso wie die Muffe 13, eine Mehrkant-Ausnehmung 36 bzw. 37 zum Eingriff eines entsprechenden Mehrkant-Pins, der antriebsmaßig mit einer Bohrspindel einer Bohrmaschineverbunden ist. Diese letzteren Gegebenheiten sind ebenfalls nicht dargestellt.

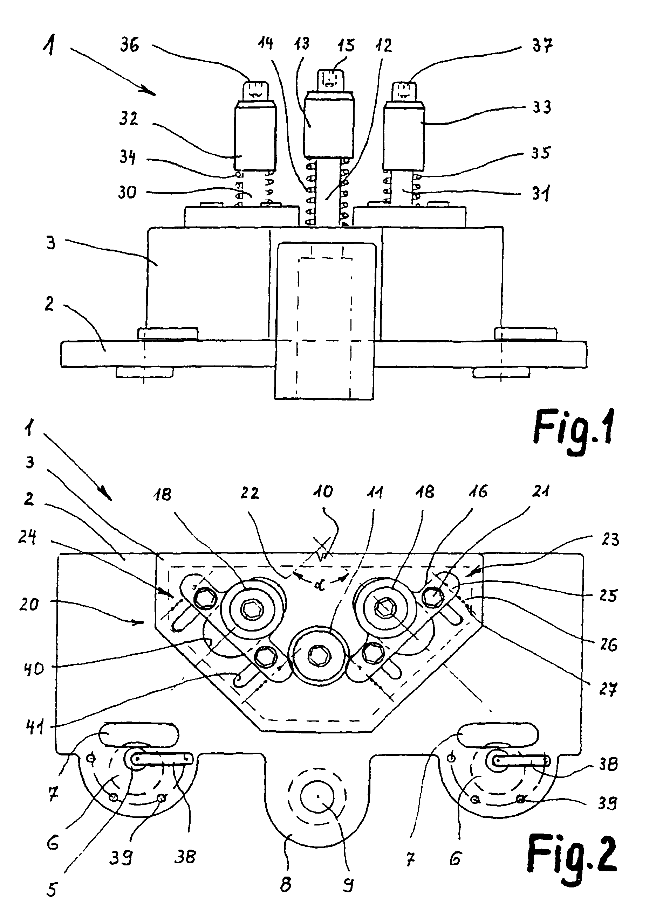

Zum freien Durchgriff und zur Verstellmöglichkeit der beiden Werkzeugführungen 18 und des jeweiligen Bohrwerkzeuges sind in der Aufsetzplatte 3 zwei Langlöcher 40 vorgesehen (vgl. Fig 2). Die Achsen der beiden Langlöcher 40 verlaufen genau auf den beiden Schenkeln 22 des Winkels a. Seitlich neben den beiden Langlöchern 40 ist jeweils ein Paar von schmaleren Langlöchern 41 vorgesehen, in welche jeweils ein Paar der Feststellschrauben 21 für die beiden Träger 16 eingreift.

Desweiteren sind in der gleichen Ansicht von unten auch die jeweiligen Reihen 25 von Bohrungen 26 und Stifte 27 der beiden Verstelleinrichtungen 20 zu erkennen, wobei die Reihen 25 parallel zu den Schenkeln 22 des Wickels α verlaufen. Wenn die Bohrungen 26 für die Stifte 27 bei sehr ähnlichen Scharnieren sehr nahe beieinanderliegen müssen, besteht auch die Möglichkeit, aus der Reihe 25 auszubrechen und einzelne Bohrungen 26 außerhalb der Reihe 25 anzuordnen. Dann müssen allerdings beim Umrüsten der Bohrvorrichtung auf solche anderen Scharniere auch die Träger 16 durch andere Träger ersetzt werden, bei denen die Bohrungen 26 und/oder Stifte 27 einen entsprechend anderen Abstand voneinander haben.

In der Figur 2 sind noch zwei Stellhebel 38 und zwei Markierungen 39 zu erkennen, die an der Grundplatte 2 angebracht sind und die zu den Stellexzentern 6 gehören.

### Wirkungsweise

Vor dem Herstellen der Hauptbohrung für den Zentralkörper des Scharnieres und den beiden Einschraublöchern für die Scharnier-Befestigungsschrauben muß die Bohrvorrichtung 1 zunächst auf den jeweiligen Scharniertyp und auf den jeweiligen Abstand des Scharniers von einer Tür- oder dgl. -Kante eingerichtet werden.

Dazu werden als erstes die Stellexzenter 6 in den Bohrungen 5 verstellt. Dabei gleiten die Stellhebel 38 der Stellexzenter 6 über die Markierungen 39 Jeder einzelnen Markierung 39 ist eine Zahl zugeordnet, die einer jeweiligen Abstandsänderung der Hauptbohrung und der beiden Einschraublöcher für das Scharnier von der Tür- o.dgl.-Kante in Millimeter entspricht. Im übrigen sind die beiden Stellexzenter 6 aber stufenlos verstellbar. Die richtige Lage der beiden Stellexzenter 6 ist in den Kontrollfenstern 7 nachprüfbar.

Anschließend werden die beiden Träger 16 mittels der Verstelleinrichtung 20 und der Fixiereinnchtungen 23 u. 24 durch Umstecken auf den Stiften 27 und/oder auf den Führungsschlitzen 29 so eingerichtet und mittels der Feststellschrauben 21 so fixiert, daß der jeweiligen Bauart des Scharnieres Rechnung getragen ist.

Schließlich wird die Grundplatte 2 samt Aufsetzplatte 3 mittels der an der Grundplatte 2 angebrachten Justierkerbe 10 ausgerichtet, und dann wird die gesamte Bohrvorrichtung 1 über die nicht dargestellte, in der Aufnahmebohrung 9 angeordnete Aufspannvorrichtung am zu bearbeitenden Werkstück festgespannt.

Die jeweils gewünschte Bohrtiefe wird mit Hilfe der auf den Schäften 12, 30, 31 verstellbaren Muffen 13, 32, 33 eingestellt. Nun ist die Bohrvorrichtung 1 einsatzbereit, und es können sowohl die Hauptbohrung für den Zentralkörper des Scharnieres als auch die beiden Einschraublöcher für die Scharnier-Befestigungsschrauben in einem einzigen Arbeitsgang schnell und sauber gebohrt werden.

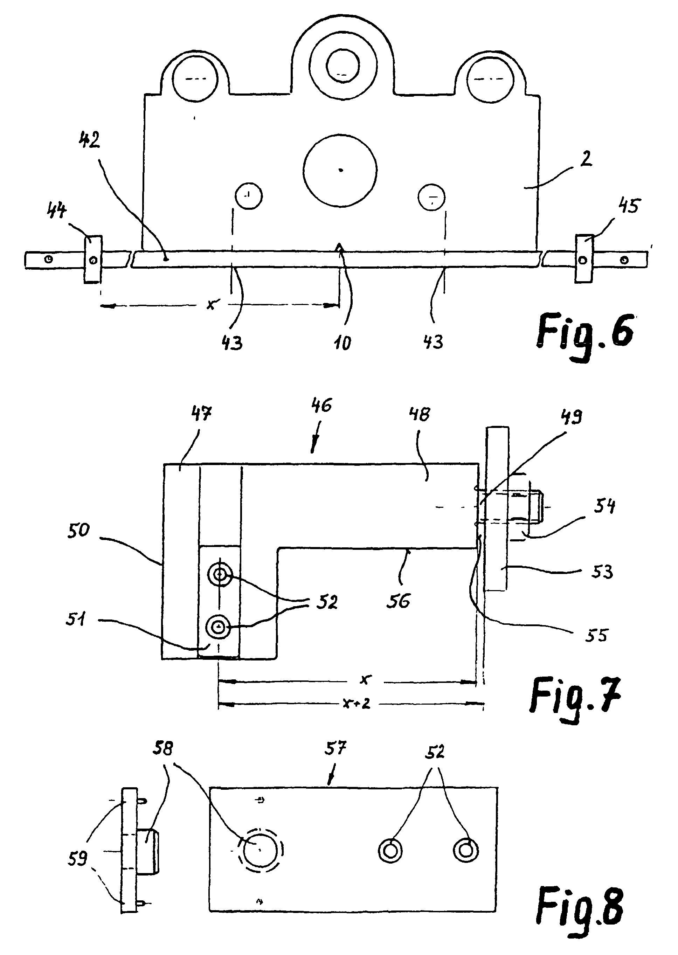

In weiterer Ausgestaltung der Erfindung wird zum Lokalisieren der Hauptbohrung für den Zentralkörper des Scharnieres mit den beiden dazugehörenden Einschraublöchem für die Scharnier-Befestigungsschrauben auf dem Türblatt - wie die Figur 6 zeigt - eine Anschlagstange 42 verwendet, die an der hier lediglich vereinfacht dargestellten Grundplatte 2 beispielsweise mittels Schrauben 43 befestigbar ist und die - ausgehend von der an der Grundplatte 2 angebrachten Justierkerbe 10 - nach beiden Seiten entsprechend Türober- und -unterkante einen gleichen Abstand von beispielsweise 100 mm (Maß x) jedes Scharnieres von der einen oder der anderen Türkante festlegt und zwar mittels zweier Anschläge 44 und 45. Diese Anschläge 44 und 45 sind auf der Anschlagstange 42 verstellbar, zum Beispiel umsteckbar, angeordnet, um das Maß x zu verändem, beispielsweise in 125 mm oder dergleichen.

Damit auch die Anordnung der Befestigungslöcher für die Verschraubung des Scharnier-Armes am Korpus ohne weiteres feststellbar ist, wird gemäß einer Weiterbildung der Erfindung eine Bohrhilfe verwendet, wie sie in den Figuren 7 und 8 dargestellt ist.

Eine solche Bohrhilfe 46 hat zum Beispiel ein Winkelstück47, dessen einer Schenkel 48 einen Zapfen mit einem Gewinde 49 und dessen anderer Schenkel 50 einen Bohrbuchsenhalter 51 trägt. Auf dem Gewindezapfen 49 ist ein Anschlag 53 verschraubbar und mittels einer Kontermutter 54 fixierbar. Außerdem hat der den Gewindezapfen 49 aufweisende Schenkel 48 eine Planfläche 55 als Ausgangsfläche für das Maß x.

Eine Innenkante 56 des Schenkels 50 dient als Basis für ein Tiefenmaß zum Beispiel 37 mm für den Abstand einer ersten Bohrung für die Befestigungslöcher im Korpus, und eine zweite Bohrung hat von der ersten einen Abstand von beispielsweise 32 mm. Zur Herstellung dieser beiden Bohrungen trägt der Schenkel 50 den Bohrbuchsenhalter 51. Da aber sowohl das Tiefenmaß von 37 mm als auch das Abstandsmaß von 32 mm auch in einer anderen Größe gewahlt werden können, ist der Bohrbuchsenhalter 51 am Schenkel 50 auswechselbar befestigt, zum Beispiel in einer Schwalbenschwanz-Aufnahme, und kann dann durch einen Bohrbuchsenhalter mit anderen Abstandsmaßen ausgetauscht werden.

Die Arbeitsweise der Bohrhilfe 46 ist derart, daß mit ihr das Maß x, also beispielsweise 100 mm festgelegt ist. Zum Bohren der Scharnierarm-Befestigungslöcher im Korpus muß nun berücksichtigt werden, daß der Korpus über die Tür oben und unten um ein geringes Maß überstehen muß, zum Beispiel 2 mm. Um die Bohrhilfe 46 entsprechend einzustellen, wird nun der Anschlag 53 um zwei Umdrehungen, das sind 2x1mm = 2mm verstellt, so daß das Maß x um 2 mm auf 102 mm vergrößert ist. Dann wird der Anschlag 53 mit der Kontermutter 54 fixiert. Nun können die Befestigungslöcher in den Korpus eingebracht werden.

Es gibt aber auch Türen, insbesondere von Schlafzimmer-Schränken, die eine beachtliche Höhe beziehungsweise Länge von zum Beispiel über 2 Meter haben. Solche Türen sind dann mit mehr als zwei, beispielsweise mit vier Scharnieren ausgerüstet. Zum Anbringen der Innen-Scharniere ist das Einhalten eines gewählten Abstands von der Ober- beziehungsweise Unterkante der Tür nicht notwendig. Deshalb wird gemäß der Erfindung nach dem Bohren der Hauptbohrung und der beiden Befestigungsbohrungen für den Zentralkörper des Scharnieres mit der Bohrvorrichtung 1 eine Bohrhilfe 57 verwendet, wie sie in der Figur 8 in Seitenansicht und Rückenansicht dargestellt ist. Diese Bohrhilfe 57 hat einen Zylinderansatz 58, der in die Hauptbohrung eingesetzt wird, mit der die Tür mittels der Bohrvorrichtung 1 versehen wurde. Die Bohrhilfe 57 hat einen rechteckigen, flachen Körper, der auf seiner einen Seite den Zylinderansatz 58 mit zwei Richtstiften 59 und auf seiner anderen Seite die zwei Bohrbuchsen 52 trägt, wie sie auch die Bohrhilfe 46 hat. Auch diese beiden Bohrbuchsen 52 haben einen Abstand von beispielsweise 32 mm voneinander und sind zur Herstellung der Befestigungsbohrungen für den Arm des Scharnieres im Korpus bestimmt. Es liegt auf der Hand, daß auch bei dieser Bohrhilfe 57 die beiden Bohrbuchsen 52 auswechselbar angeordnet sein können. Mit einer solchen Bohrhilfe 57 ist dann die Montage der Innen-Scharniere wesentlich erleichtert.

Mit der erfindungsgemaßen Bohrvorrichtung 1 wird einem Handwerker, insbesondere einem Schreiner, eine Bohrhilfe zur Verfügung gestellt, die es ihm ermöglicht, unterschiedlichen Scharnierformen und Scharnieranbringungen Rechnung zu tragen, indem er die Bohrvorrichtung 1 am zu bearbeitenden Werkstück je nach gewünschter Vorgabe so plaziert, daß die Zentralbohrung und die beiden Einschraublöcher leicht anzubringen sind. Nach der Justierung der Bohrvorrichtung 1 und ihrer Fixierung am Werkstück führt der Handwerker einen in ein Spannfutter einer Bohrmaschine befestigten Pin jeweils in eine der drei Mehrkantausnehmungen 15, 36, 37 ein, und er kann dann in einer einzigen Aufspannung sowohl die Zentralbohrung als auch die beiden Einschraublöcher in das Werkstück einbringen.

### Bezugszahlenliste

- 1: Bohrvorrichtung
- 2: Grundplatte
- 3: Aufsetzplatte
- 4: Schrauben
- 5: Bohrung
- 6: Stellexzenter
- 7: Kontrollfenster
- 8: Aufsatz
- 9: Aufnahmebohrung
- 10: Justierkerbe
- 11: Werkzeug-Führungsbuchse
- 12: Schaft
- 13: Muffe
- 14: Rückführfeder
- 15: Mehrkant-Ausnehmung
- 16: Träger
- 17: Zentralstück
- 18: Werkzeugführung
- 19: Arme
- 20: Verstelleinrichtung
- 21: Festellschraube
- 22: Schenkel
- 23: Fixiereinrichtung
- 24: Fixiereinrichtung
- 25: Reihe
- 26: Bohrungen
- 27: Stifte
- 28: Bohrungen
- 29: Führungsschlitze
- 30: Schaft
- 31: Schaft
- 32: Muffe
- 33: Muffe
- 34: Rückführfeder
- 35: Rückführfeder
- 36: Mehrkant-Ausnehmung
- 37: Mehrkant-Ausnehmung
- 38: Stellhebel
- 39: Markierungen
- 40: Langlöcher
- 41: Langlöcher
- 42: Anschlagstange
- 43: Schrauben
- 44: Anschlag
- 45: Anschlag
- 46: Bohrhilfe
- 47: Winkelstück
- 48: Schenkel
- 49: Gewinde
- 50: Schenkel
- 51: Bohrbuchsenhalter
- 52: Bohrbuchsen
- 53: Anschlag
- 54: Kontermutter
- 55: Planfläche
- 56: Innenkante
- 57: Bohrhilfe
- 58: Zylinderansatz
- 59: Richtstifte

## Patentansprüche

1. Bohrvorrichtung (1) für Türen, Klappen oder Deckel o. dgl., an denen Scharniere angebracht werden, die mit einem Zentralstück und mit zwei zur Aufnahme von Scharnier-Befestigungsmittel bestimmten, durchbohrten Befestigungslappen versehen sind, wobei die Bohrvorrichtung (1) zur Einbringung einer Zentralbohrung für das Zentralstück des Scharniers eine zentrale Werkzeug-Führungsbuchse (11) aufweist, die in eine Aufsetzplatte (3) eingelassen ist, und zur Herstellung von zwei, die Befestigungsmittel für das Scharnier aufnehmenden Einschraublöchern zu beiden Seiten der zentralen Werkzeug-Führungsbuchse (11) je eine Werkzeugführung (18) eingerichtet ist und die beiden Werkzeugfuhrungen (18) auf der Aufsetzplatte (3) verstellbar und fixierbar sind.

2. Bohrvorrichtung nach Anspruch 1, **dadurch gekennzeichnet, daß** die beiden Werkzeugführungen (18) in Stufen verstellbar und fixierbar sind.

3. Bohrvorrichtung nach Anspruch 1 oder 2, **dadurch gekennzeichnet, daß** die beiden Werkzeugführungen (18) auf der Aufsetzplatte (3) entlang der beiden Schenkel (22) eines Winkels (α) verstellbar und / oder fixierbar sind, der vorzugsweise ein rechter Winkel von 90 ° ist.

4. Bohrvorrichtung nach einem der Ansprüche 1 - 3, **dadurch gekennzeichnet, daß** die beiden Werkzeugführungen (18) je einen Träger (16) haben, der in einem Zentralstück (17) die Werkzeugführung aufnimmt und mit zwei seitlichen Armen (19) versehen ist, die je eine Verstelleinrichtung (20) und je eine Feststellschraube (21) für den Träger (16) aufnehmen, und daß in der Aufsetzplatte (3) in Richtung der beiden Schenkel (22) des Winkels (α) je eine Reihe (25) von Bohrungen (26) vorgesehen ist, die beide zum verstellenden Einsetzen der Verstelleinrichtung (20) bestimmt sind.

5. Bohrvorrichtung nach einem der Ansprüche 1 - 4, **dadurch gekennzeichnet, daß** ein in der zentralen Werkzeug-Führungsbuchse (11) gelagertes Bohrwerkzeug und die beiden in den Werkzeugführungen (18) geführten Bohrer an ihren Schäften (12, 30, 31) mit Muffen (13, 32, 33) versehen sind, die der Kraft je einer Rückführfeder (14, 34, 35) unterliegen, daß die Muffen (13, 32,33) auf den Schäften (12, 30, 31) zur Tiefenbegrenzung des Bohrwerkzeuges und der Bohrer verstellbar und feststellbar angeordnet sind und daß das zentral gelagerte Bohrwerkzeug und die beiden seitlich von diesem angeordneten Bohrer an ihren Muffen (13, 32, 33) zur Krafteinleitung mit je einer Mehrkant-Ausnehmung (15, 36,37) versehen sind, in welche über Bohrspindeln antreibbare Mehrkant-Pins eingreifen können.

6. Bohrvorrichtung nach einem der Ansprüche 1 - 5, **dadurch gekennzeichnet, daß** die Aufsetzplatte (3) an einer Grundplatte (2) befestigt ist, die mit zwei, einen relativ großen Abstand voneinander aufweisenden Bohrungen (5) zur Aufnahme von zwei Stellexzentern (6) versehen sind, daß die beiden Bohrungen (5) zur Kontrolle der jeweiligen Einstellung der Stellexzenter (6) mit Kontrollfenstern (7) versehen sind und daß zwischen den beiden Stellexzentern (6) an der Grundplatte (2) eine Aufnahmebohrung (9) für eine Aufspanneinrichtung der Bohrvorrichtung (1) vorgesehen ist.

7. Bohrvorrichtung nach Anspruch 6, **dadurch gekennzeichnet, daß** an der Grundplatte (2) eine Justierkerbe (10) zur Ausrichtung auf dem Werkstück angebracht ist.

8. Bohrvorrichtung nach Anspruch 7, **dadurch gekennzeichnet, daß** an der Grundplatte (2) eine Anschlagstange (42) anbringbar ist, mit der ausgehend von der mittigen Justierkerbe (10) nach beiden Seiten ein Mittelabstand (Maß x) der einzubringenden Bohrungen von jeweils einer der beiden Endkanten der Tür, Klappe oder des Deckels mittels verstellbarer Anschläge (44 und 45) festlegbar ist

9. Bohrvorrichtung (1) für Türen, Klappen oder Deckel o. dgl., an denen Scharniere angebracht werden, die mit einem Zentral stück und mit zwei zur Aufnahme von Scharnier-Befestigungsmittel bestimmten, durchbohrten Befestigungslappen versehen sind, wobei die Bohrvorrichtung (1) zur Einbringung einer Zentralbohrung für das Zentralstück des Scharniers eine zentrale Werkzeug-Führungsbuchse (11) aufweist, die in eine von mehreren unterschiedlichen und gegeneinander austauschbaren Aufsetzplatten (3) eingelassen ist, und zur Herstellung von zwei, die Befestigungsmittel für das Scharnier aufnehmenden Einschraublöchern zu beiden Seiten der zentralen Werkzeug-Führungsbuchse (11) je eine Werkzeugführung (18) eingerichtet ist und die beiden Werkzeugführungen (18) auf der jeweiligen Aufsetzplatte (3) fixierbar sind.

## Claims

1. Drilling device (1) for doors, flaps, lids or the like to which there are fitted hinges which are provided with a central piece and with two perforated fastening flaps intended for receiving hinge-fastening means, wherein said drilling device (1) has, for the purpose of incorporating a central bore for the central piece of the hinge, a central tool-guiding bush (11) which is let into a mounting plate (3); and one tool-guide (18) in each case is arranged on either side of the central tool-guiding bush (11) for the purpose of producing two screw-in holes which receive the fastening means for the hinge; and the two tool-guides (18) can be adjusted and locked in position on said mounting plate (3).

2. Drilling device according to claim 1, **characterised in that** the two tool-guides (18) can be adjusted and locked in position in stages.

3. Drilling device according to claim 1 or 2, **characterised in that** the two tool-guides (18) can be adjusted and/or locked in position on the mounting plate (3) along the two sides (22) of an angle (α) which is preferably a right angle of 90°.

4. Drilling device according to one of claims 1 to 3, **characterised in that** the two tool-guides (18) each have a carrier (16) which receives said tool-guide in a central piece (17) and is provided with two lateral arms (19) which each receive an adjusting arrangement (20) and an immobilising screw (21) for the carrier (16); and that there is provided in the mounting plate (3), in the direction of the two sides (22) of the angle (α), a row (25) of bores (26) in each case, which two rows are intended for the insertion, in an adjusting manner, of the adjusting arrangement (20).

5. Drilling device according to one of claims 1 to 4, **characterised in that** a drilling tool which is mounted in the central tool-guiding bush (11) and the two drills which are guided in the tool-guides (18) are provided, on their shafts (12, 30, 31), with sleeves (13, 32, 33) which are each subjected to the force of a restoring spring (14, 34, 35); that said sleeves (13, 32, 33) can be adjusted and fixed in position on the shafts (12, 30, 31) for the purpose of limiting the depth of the drilling tool and of the drills; and that the centrally mounted drilling tool and the two drills disposed alongside the latter are each provided on their sleeves (13, 32, 33), for force-introducing purposes, with a polygonal recess (15, 36, 37), in which recesses polygonal pins, which can be driven via drilling spindles, can engage.

6. Drilling device according to one of claims 1 to 5, **characterised in that** the mounting plate (3) is fastened to a base plate (2) which is provided with two bores (5), which are at a relatively large distance from one another, for receiving two positioning eccentrics (6); that the two bores (5) are provided with monitoring windows (7) for the purpose of monitoring the particular setting of the positioning eccentrics (6); and that a receiving bore (9) for a clamping-on arrangement for the drilling device (1) is provided between the two positioning eccentrics (6) on the base plate (2).

7. Drilling device according to claim 6, **characterised in that** an adjusting notch (10) for the purpose of orientation on the workpiece is located on the base plate (2).

8. Drilling device according to claim 7, **characterised in that** there can be located on the base plate (2) a stop bar (42) with which it is possible to fix, towards both sides starting from the central adjusting notch (10), a central distance (dimension x) of the bores to be incorporated, from one of the two terminal edges of the door, flap or lid in each case, by means of adjustable stops (44 and 45).

9. Drilling device (1) for doors, flaps, lids or the like to which there are fitted hinges which are provided with a central piece and with two perforated fastening flaps intended for receiving hinge-fastening means, wherein said drilling device (1) has, for the purpose of incorporating a central bore for the central piece of the hinge, a central tool-guiding bush (11) which is let into one of a number of different and interchangeable mounting plates (3); and one tool-guide (18) in each case is arranged on either side of the central tool-guiding bush (11) for the purpose of producing two screw-in holes which receive the fastening means for the hinge; and the two tool-guides (18) can be locked in position on the particular mounting plate (3).

## Revendications

1. Dispositif de perçage (1) pour portes, abattants ou couvercles ou analogues auxquels seront fixées des charnières qui comprennent un élément central et deux pattes de fixation percées destinées à recevoir des moyens de fixation pour charnière, le dispositif de perçage (1) présentant un canon de perçage central (11) enchâssé dans une plaque supérieure (3) pour réaliser un perçage central dans l'élément central de la charnière et un guide d'outil (18) étant ménagé de part et d'autre du canon de perçage central (11) pour réaliser deux trous de vissage destinés à recevoir les moyens de fixation pour la charnière, et les deux guides d'outil (18) pouvant être déplacés et immobilisés sur la plaque supérieure (3).

2. Dispositif de perçage selon la revendication 1, **caractérisé en ce que** les deux guides d'outil (18) peuvent être déplacés et immobilisés par paliers.

3. Dispositif de perçage selon la revendication 1 ou 2, **caractérisé en ce que** les deux guides d'outil (18) peuvent être déplacés et/ou immobilisés sur la plaque supérieure (3) le long des deux côtés (22) d'un angle (α) qui est de préférence un angle droit de 90°.

4. Dispositif de perçage selon l'une des revendications 1-3, **caractérisé en ce que** les deux guides d'outil (18) comportent chacun un support (16) qui reçoit, dans une partie centrale (17), le guide d'outil et qui est doté de deux bras latéraux (19) qui reçoivent chacun un dispositif de réglage (20) et une vis d'immobilisation (21) pour le support (16), et **en ce qu'**une rangée (25) de perçages (26) est prévue dans la plaque supérieure (3), dans la direction de chacun des deux côtés (22) de l'angle (α), lesquelles rangées sont toutes deux destinées à permettre de déplacer le dispositif de réglage (20).

5. Dispositif de perçage selon l'une des revendications 1-4, **caractérisé en ce qu'**un outil de perçage monté dans le canon de perçage central (11) et les deux forets guidés dans les guides d'outil (18) sont dotés sur leurs tiges (12, 30, 31) de manchons (13, 32, 33), qui sont chacun soumis à la force d'un ressort de rappel (14, 34, 35), **en ce que** les manchons (13, 32, 33) en vue de limiter la profondeur de pénétration de l'outil de perçage et des forets sont disposés sur les tiges (12, 30, 31) de manière à pouvoir être déplacés et immobilisés, et **en ce que** l'outil de perçage monté au centre et les deux forets disposés de part et d'autre de ce dernier sont chacun dotés sur leur manchon (13, 32, 33), pour la transmission de la force, d'un évidement polygonal (15, 36, 37) dans lequel peuvent se mettre en prise des ergots polygonaux pouvant être entraînés par des broches de perçage.

6. Dispositif de perçage selon l'une des revendications 1 - 5, **caractérisé en ce que** la plaque supérieure (3) est fixée sur une plaque de base (2) qui est munie de deux perçages (5) dont l'écartement est relativement grand et qui sont destinés à recevoir deux excentriques de réglage (6), **en ce que** les deux perçages (5) sont munis de fenêtres de contrôle (7) pour vérifier le réglage des excentriques (6), et **en ce qu'**un perçage de réception (9) est prévu sur la plaque de base (2), entre les deux excentriques (6), qui est destiné à un dispositif de fixation du dispositif de perçage (1).

7. Dispositif de perçage selon la revendication 6, **caractérisé en ce qu'**une encoche d'ajustement (10) est prévue sur la plaque de base (2), qui est destinée à permettre le positionnement sur la pièce à usiner.

8. Dispositif de perçage selon la revendication 7, **caractérisé en ce qu'**une barre de butée (42) peut être fixée sur la plaque de base (2), qui permet de déterminer, en partant de l'encoche d'ajustement centrale (10) vers les deux côtés, une distance (cote x) à laquelle les perçages doivent être réalisés par rapport à l'une des deux arêtes d'extrémité de la porte, de l'abattant ou du couvercle, au moyen de taquets mobiles (44 et 45).

9. Dispositif de perçage (1) pour portes, abattants ou couvercles ou analogues auxquels seront fixées des charnières qui comprennent un élément central et deux pattes de fixation percées destinées à recevoir des moyens de fixation pour charnière, le dispositif de perçage (1) présentant un canon de perçage central (11) enchâssé dans une plaque supérieure (3) choisie parmi plusieurs plaques supérieures différentes et interchangeables, pour réaliser un perçage central dans l'élément central de la charnière et un guide d'outil (18) étant ménagé de part et d'autre du canon de perçage central (11) pour réaliser deux trous de vissage destinés à recevoir les moyens de fixation pour la charnière, et les deux guides d'outil (18) pouvant être immobilisés sur la plaque supérieure (3) mise en oeuvre.
